# EUROPÄISCHE PATENTSCHRIFT

(11) **EP 0 473 924 B1**
(45) Veröffentlichungstag und Bekanntmachung des Hinweises auf die Patenterteilung: **27.09.1995**
(21) Anmeldenummer: 91112288.5
(22) Anmeldetag: 23.07.1991
(51) Int. Cl.: C08F 10/06, C08F 4/646

(54) **Ziegler-Natta-Katalysatorsysteme mit metallorganischen Verbindungen**
Ziegler-Natta catalytic systems with organometal compounds
Systèmes catalytiques Ziegler-Natta contenant des composés organométalliques

(30) Priorität: 01.08.1990 DE 4024421
(43) Veröffentlichungstag der Anmeldung: 11.03.1992
(73) Patentinhaber: BASF Aktiengesellschaft, 67063 Ludwigshafen (DE)
(72) Erfinder: Hungenberg, Klaus-Dieter, Dr., W-6943 Birkenau (DE); Kerth, Juergen, Dr., W-6719 Carlsberg (DE)

(56) Entgegenhaltungen:
- US-A- 4 383 938
- US-A- 4 567 154

## Beschreibung

Die vorliegende Erfindung betrifft Katalysatorsysteme vom Typ der Ziegler-Natta-Katalysatoren, enthaltend als aktive Bestandteile
a) eine titanhaltige Feststoffkomponente mit Titan, Magnesium, Halogen und einem Carbonsäureester als Elektronendonor,
b) eine Aluminiumkomponente,
c) eine weitere Elektronendonorkomponente, sowie als zusätzliche Komponente
d) eine metallorganische Verbindung der allgemeinen Formel A oder B

   M¹R¹ (A), M²R¹R² (B),

   in der M¹ ein Element der I. Hauptgruppe und M² ein Element der II. Hauptgruppe des Periodensystems bedeutet und R¹ und R² gleich oder verschieden sind und für eine C₁-C₁₀-Alkylgruppe, eine C₆-C₁₂-Aryl- oder Arylalkylgruppe, oder eine 5- bis 7-gliedrige Cycloalkylgruppe, die ihrerseits C₁-C₈-Alkylgruppen tragen kann, stehen.

Außerdem betrifft die Erfindung die Herstellung solcher Katalysatorsysteme, die Herstellung von Polymerisaten des Propylens mit Hilfe dieser Katalysatorsysteme, die hiernach erhältlichen Polymerisate sowie Folien und Formkörper aus diesen Polymerisaten.

Katalysatorsysteme vom Typ der Ziegler-Natta-Katalysatoren sind u.a. aus der EP-B 14523, der EP-A-23425, der EP-A 45975, der EP-A 195 497 und der US-A 4 857 613 bekannt. Diese Systeme werden insbesondere zur Polymerisation von α-Olefinen verwendet und enthalten u.a. Verbindungen des mehrwertigen Titans, Aluminiumhalogenide und/oder -alkyle, sowie Elektronendonorverbindungen, insbesondere Siliciumverbindungen, Ether, Carbonsäureester, Ketone und Lactone, die einerseits in Verbindung mit der Titanverbindung und andererseits als Cokatalysator verwendet werden.

Um eine wirtschaftliche Polyolefinproduktion zu gewährleisten, müssen solche Katalysatorsysteme u.a. eine hohe Produktivität aufweisen. Darunter versteht man das Verhältnis der gebildeten Menge Polymerisat zur Menge des eingesetzten Katalysators. Weiterhin ist es erforderlich, daß die dabei erhältlichen Polymerisate möglichst kristallin und stereospezifisch sind, d.h. der Anteil von xylollöslichem Polypropylen sollte möglichst niedrig liegen.

Diese beiden Zielvorgaben lassen sich nach dem Stand der Technik zusammen nur bedingt verwirklichen. So ist beispielsweise aus der EP-A 86473 ein Katalysatorsystem bekannt, bei dem als Elektronendonorverbindungen als Bestandteile der titanhaltigen Feststoffkomponente Carbonsäureester und als Cokatalysator u.a. Siliciumverbindungen verwendet werden, das zwar eine befriedigend hohe Produktivität aufweist, im Hinblick auf die Stereospezifität der entstehenden Polymerisate aber zu wünschen übrig läßt. In der EP-A 171 200 wird ferner ein Ziegler-Natta-Katalysatorsystem beschrieben, das als Bestandteil der titanhaltigen Feststoffkomponente u.a. Carbonsäureester, sowie Silicium- und Aluminiumverbindungen als Cokatalysatoren enthält. Dieses Katalysatorsystem ermöglicht die Herstellung von Polypropylenen mit hoher Stereospezifität, weist aber neben einer nicht mehr befriedigenden Produktivität den weiteren Nachteil auf, daß die Kornverteilung des hierbei erhältlichen Polymerisats zu breit ist.

Neben diesen, insbesondere für die Verarbeitung der Polymerisate wichtigen Eigenschaften ist auch ein niedriger Halogengehalt im Polyolefin von Bedeutung, um die Verwendung derartiger Materialien in Kombination mit korrosionsgefährdeten Stoffen zu ermöglichen. Dazu ist es vor allem notwendig, den Halogengehalt im Polymerisat deutlich zu reduzieren.

In der US-A-4 857 613 wird ein Katalysatorsystem beschrieben, das als Bestandteile der titanhaltigen Feststoffkomponente neben Titan, Magnesium, Halogen und Kieselgel ein Benzolcarbonsäurederivat aufweist. Daneben werden dabei Aluminiumverbindungen und organische Siliciumverbindungen als Cokatalysatoren verwendet. Dieses Katalysatorsystem ermöglicht die Herstellung von Polyolefinen mit hoher Stereospezifität und geringen Katalysatorresten und weist zudem eine hohe Produktivität auf. Die dabei erhaltenen Polymerisate sind jedoch gelegentlich nicht ganz frei von einem gewissen Feinststaubanteil, was insbesondere bei kontinuierlichem Betrieb zu Störungen, beispielsweise zu Verstopfungen in den, dem Reaktor nachgeschalteten Anlageteilen führen kann.

Weiterhin sind aus der US-A 4 383 938 und der US-A 4 567 154 Katalysatorsysteme zur Polymerisation von Alk-1-enen bekannt, die sich insbesondere durch eine hohe Aktivität und Stereospezifität auszeichnen. Die dort beschriebenen Katalysatorsysteme enthalten neben einer Übergangsmetallkomponente u.a. eine halogenhaltige Aluminiunkomponente .

Der vorliegenden Erfindung lag als Aufgabe die Entwicklung eines neuen Katalysatorsystems zugrunde, mit dem den geschilderten Nachteilen weitgehend abgeholfen werden kann und mit dem es möglich ist, Polymerisate des Propylens mit hoher Produktivität herzustellen, die sich durch eine hohe Kristallinität, einen geringen Anteil an Katalysatorresten und insbesondere einen geringen Feinststaubanteil auszeichnen.

Demgemäß wurden die in den Patentansprüchen angeführten neuen Katalysatorsysteme gefunden.

Zur Herstellung der titanhaltigen Feststoffkomponente a) werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wobei sich Silicium- und Aluminiumoxide, sowie Aluminiumsilicate der Bruttoformel SiO₂·aAl₂O₃, wobei a für einen wert von 0,001 bis 2, insbesondere von 0,01 bis 0,5 steht, gut bewährt haben.

Die bevorzugt verwendeten Träger weisen einen Teilchendurchmesser von 0, 1 bis 1000 µm, insbesondere von 1 bis 500 µm, ein Porenvolumen von 0,1 bis 10 cm³/g, insbesondere von 1,0 bis 5,0 cm³/g und eine spezifische Oberfläche von 10 bis 1000 m²/g, insbesondere von 100 bis 500 m²/g auf.

Weitere Bestandteile der titanhaltigen Feststoffkomponente sind u.a. Verbindungen des Magnesiums. Als solche kommen neben Magnesiumhalogeniden, Magnesiumalkylen und Magnesiumarylen auch Magnesiumalkoxy- und Magnesiumaryloxyverbindungen in Betracht, wobei insbesondere Magnesiumdichlorid, Magnesiumdibromid und Magnesiumdi-(C₁-C₁₀-alkyl)-Verbindungen verwendet werden. Daneben enthält die titanhaltige Feststoffkomponente ein Halogen, bevorzugt Chlor oder Brom.

Neben den drei- oder vierwertigen Titanverbindungen, dem Träger, der Magnesiumverbindung und dem Halogen enthält die titanhaltige Feststoffkomponente noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I 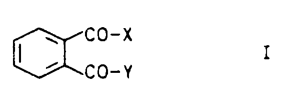
verwendet, wobei X und Y jeweils für Chlor oder einen C₁- bis C₁₀-Alkoxyrest oder gemeinsam für Sauerstoff stehen. Besonders bevorzugte Elektronendonorverbindungen sind Phthalsäureester, wobei X und Y einen C₁-C₈-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u. a. Diester von 3- oder 4-gliedrigen, gegebenenfalls substtuierten Cycloalkyl-1,2-dicarbonsäuren sowie Monoester von gegebenenfalls substituierten Benzophenon-2-carbonsäuren. Als Hydroxyverbindungen werden bei diesen Estern die bei Veresterungsreaktionen ublichen Alkohole verwendet, u.a. C₁- bis C₁₅-Alkanole, C₅- bis C₇-Cycloalkanole, die ihrerseits C₁- bis C₁₀-Alkylgruppen tragen können, ferner Phenole, Naphthole sowie die C₁-C₁₀-Alkylderivate dieser Verbindungen.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066 und der US-A 4 857 613 beschrieben.

Bei der Herstellung der titanhaltigen Feststoffkomponente wird bevorzugt folgendes zweistufige Verfahren angewandt.

In der ersten Stufe versetzt man zunächst einen feinteiligen Träger, bevorzugt Siliciumoxid oder SiO₂·aAl₂O₃ - wobei a für eine Zahl im Bereich von 0,001 und 2, insbesondere im Bereich von 0,01 und 0,5 steht -, mit einer Lösung einer magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren überschuß, bezogen auf die magnesiumhaltige Verbindung, ein. Danach gibt man ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung, insbesondere ein Phthalsäurederivat der allgemeinen Formel I hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Die Lösung wird mindestens eine Stunde lang bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

In der zweiten Stufe extrahiert man den aus der ersten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel mindestens 5 Gew.-% Titantetrachlorid enthält. Danach wäscht man das Produkt solange mit einem flüssigen Alkan, bis der Gehalt der Waschflüssigkeit an Titantetrachlorid geringer ist als 2 Gew.-%.

Die auf diese Weise erhältliche titanhaltige Feststoffkomponente a) wird zusammen mit Cokatalysatoren, d.h. Aluminiumverbindungen und Elektronendonorverbindungen, als Ziegler-Natta-Katalysatorsystem verwendet.

Als Aluminiumkomponente werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Neben der titanhaltigen Feststoffkomponente und der Aluminiumverbindung enthalten die erfindungsgemäßen Katalysatorsysteme bevorzugt ferner noch weitere Elektronendonorverbindungen wie mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonoren sind siliciumorganische Verbindungen der Formel II

R³ₙSi(OR⁴)4-n (II)

wobei
R³ eine C₁- bis C₁₂-Alkylgruppe, eine 5- bis 7-gliedrige Cycloalkylgruppe, die ihrerseits eine C₁- bis C₈-Alkylgruppe tragen kann, oder eine C₆- bis C₁₂-Aryl- oder Arylalkylgruppe, R⁴ eine C₁- bis C₁₂-Alkylgruppe bedeutet und n für die Zahlen 1, 2 oder 3 steht. Besonders bevorzugt werden dabei solche Verbindungen, in denen R³ eine C₁- bis C₈-Alkylgruppe oder eine 5- bis 7-gliedrige Cycloalkylgruppe, sowie R⁴ eine C₁- bis C₄-Alkylgruppe bedeutet und n für die Zahlen 1 oder 2 steht.

Unter diesen Verbindungen sind Dimethoxydiisopropylsilan, Dimethoxyisobutylisopropylsilan, Dimethoxydiisobutylsilan, Dimethoxydicyclopentylsilan und Diethoxyisobutylisopropylsilan besonders geeignet.

Bevorzugt werden solche Katalysatorsysteme verwendet, bei denen das Atomverhältnis zwischen Aluminium aus der Aluminiumverbindung b) und Titan aus der titanhaltigen Feststoffkomponente a) 10:1 bis 800:1, insbesondere 20:1 bis 200:1, und das Molverhältnis zwischen der Aluminiumverbindung b) und der Elektronendonorverbindung c) 1:1 bis 100:1, insbesondere 2:1 bis 80:1 beträgt.

Die erfindungsgemäßen Katalysatorsysteme enthalten zusätzlich noch eine metallorganische Verbindung d), der allgemeinen Formel (A) oder (B)

M¹R¹ (A), M²R¹R² (B)

in der M¹ ein Element der I. Hauptgruppe und M² ein Element der II. Hauptgruppe des Periodensystems bedeutet und R¹ und R² gleich oder verschieden sind und für eine C₁-C₁₀-Alkylgruppe, eine C₆-C₁₂-Aryl- oder Arylalkylgruppe, oder eine 5- bis 7-gliedrige Cycloalkylgruppe, die ihrerseits C₁-C₈-Alkylgruppen tragen kann, stehen. Bevorzugt werden dabei Verbindungen der allgemeinen Formel (A) verwendet, und von diesen wiederum insbesondere solche, welche als Reste R¹ eine C₁-C₁₀-Alkylgruppe enthalten.

Beispiele für vorzugsweise eingesetzte metallorganische Verbindungen sind u.a. Methyllithium, Ethyllithium, n-Propyllithium, iso-Propyllithium, n-Butyllithium, iso-Butyllithium, n-Pentyllithium, n-Hexyllithium, n-Heptyllithium, n-Octyllithium, Methylnatrium, Ethylnatrium, n-Propylnatrium, iso-Propylnatrium, n-Butylnatrium, iso-Butylnatrium, n-Pentylnatrium, n-Hexylnatrium, Methylkalium, Ethylkalium, n-Propylkalium, iso-Propylkalium, n-Butylkalium, n-Pentylkalium und n-Hexylkalium. Als besonders bevorzugte metallorganische Verbindung wird n-Butyllithium verwendet.

Die metallorganische Verbindung d) wird der titanhaltigen Feststoffkomponente a), üblicherweise vor der Vereinigung mit der Aluminiumkomponente b) und der weiteren Elektronendonorkomponente c) in Form einer Lösung in einem inerten Lösungsmittel, beispielsweise in n-Hexan, n-Heptan, Benzol oder Toluol hinzugefügt. Bevorzugt werden pro Gramm der titanhaltigen Feststoffkomponente a) 0,005 bis 0,5 mmol, insbesondere 0,01 bis 0,5 mmol, der metallorganischen Verbindung verwendet. In einer besonders bevorzugten Ausführungsform setzt man die metallorganische Verbindung der titanhaltigen Feststoffkomponente a) in einem Vorratsgefäß am Eingang des Polymerisationsreaktors zu und führt die dabei erhaltene Suspension anschließend kontinuierlich in den Reaktor ein.

Die erfindungsgemäßen Katalysatorsysteme sind für die Herstellung von Polymerisaten des Propylens besonders geeignet.

Die Herstellung von Polymerisaten des Propylens kann in den üblichen, für die Polymerisation von Propylen verwendeten Reaktoren entweder absatzweise oder bevorzugt kontinuierlich u.a. als Suspensionspolymerisation oder bevorzugt als Gasphasenpolymerisation, durchgeführt werden. Geeignete Reaktoren sind u. a. kontinuierlich betriebene Rührreaktoren, die ein Festbett aus feinteiligem Polymerisat enthalten, welches üblicherweise durch geeignete Rührvorrichtungen in Bewegung gehalten wird. Selbstverständlich kann die Reaktion auch in einer Reihe von mehreren, hintereinander geschalteten Reaktoren durchgeführt werden. Die Reaktiondauer hängt entscheidend von den jeweils gewählten Polymerisationsbedingungen ab. Sie liegt üblicherweise zwischen 0,2 und 20 Stunden, meistens zwischen 0,5 und 10 Stunden.

Unter Polymerisaten des Propylens werden neben Homopolymerisaten des Propylens auch Copolymerisate des Propylens mit untergeordneten Mengen anderer Alk-1-ene mit 2 bis 12 C-Atomen verstanden, z.B. von Ethylen, But-1-en, Pent-1-en, 4-Hethylpent-1-en, Hex-1-en, Hept-1-en und Oct-1-en. Besonders geeignete Comonomere sind Ethylen und But-1-en.

Das erfindungsgemäße Katalysatorsystem eignet sich insbesondere zur Herstellung von Propylenhomopolymerisaten, von statistisch, alternierend oder blockartig aufgebauten Propylen-Ethylen-Copolymerisaten mit bis zu 20 Gew.-% von einpolymerisiertem Ethylen und von Terpolymerisaten des Propylens mit bis zu 20 Gew.-% einpolymerisierten Comonomeren.

Die Polymerisationsreaktion wird zweckmäßigerweise bei Temperaturen von 20 bis 160°C und Drücken von 1 bis 100 bar durchgeführt. Bevorzugt sind dabei Temperaturen von 40 bis 120°C und Drücke von 10 bis 80 bar. Die Molmasse der dabei gebildeten Polyolefine kann durch Zugabe von in der Polymerisationstechnik gebräuchlichen Reglern, beispielsweise von Wasserstoff kontrolliert und auf eine engere Verteilung eingestellt werden. Weiterhin ist es möglich, inerte Lösungsmittel wie beispielsweise Toluol oder Hexan, Inertgase wie Stickstoff oder Argon und kleinere Mengen Polypropylenpulver mitzuverwenden.

Die mit Hilfe des erfindungsgemäßen Katalysatorsystems erhältlichen Polymerisate weisen im allgemeinen mittlere Molmassen M̅_{w} zwischen 10.000 und 1.000.000 und Schmelzflußindizes im Bereich von 0,1 bis 500 g/10 min, vorzugsweise im Bereich von 0,2 bis 250 g/10 min, jeweils gemessen nach DIN 53 735 bei 230°C und 2,16 kg, auf. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird.

Mit dem erfindungsgemäßen Katalysatorsystem wird sowohl die Produktivität als auch die Kristallinität bei der Polymerisation von Propylen verbessert. Die auf diese Weise erhältlichen Polymerisate weisen einen geringen Gehalt an Katalysatorresten, beispielsweise an Chlor, eine hohe Schüttdichte, sowie insbesondere deutlich verminderte Anteile an Feinststaub (Korngröße < 125 µm) auf.

Aufgrund ihrer guten mechanischen Eigenschaften eignen sich die mit dem erfindungsgemäßen Katalysatorsystem hergestellten Polymerisate des Propylens vor allem als Materialien für Folien und Formkörper.

### Beispiele

### 1. Herstellung der titanhaltigen Feststoffkomponente (a)

Dabei versetzte man in einer ersten Stufe SiO₂, welches einen Teilchendurchmesser von 20 bis 45 µm, ein Porenvolumen von 1, 75 cm³/g und eine Oberfläche von 320 m²/g aufwies, mit in n-Heptan gelöstem Butyl-octylmagnesium, wobei pro Mol SiO₂·0,3 mol der Magnesiumverbindung eingesetzt wurden. Die Reaktionsmischung wurde 1,5 Stunden lang bei 90°C gerührt, danach auf 20°C abgekühlt und anschließend wurde die 10-fache molare Menge, bezogen auf die magnesiumorganische Verbindung, an Chlorwasserstoff eingeleitet. Nach 30 Minuten trennte man das festphasige Produkt vom Lösungsmittel ab.

Das aus der ersten Stufe erhältliche Produkt wurde mit n-Heptan versetzt und anschließend wurde unter ständigem Rühren 3 Mol Ethanol, bezogen auf 1 Mol Magnesium, hinzugefügt. Dieses Gemisch wurde 1,5 Stunden bei 80°C gerührt und danach mit 6 Mol Titantetrachlorid und 0,5 Mol Phthalsäuredi-n-butylester, jeweils bezogen auf 1 Mol Magnesium, versetzt. Das Reaktionsgemisch wurde weitere zwei Stunden gerührt, wonach der Feststoff vom Lösungsmittel durch Filtration abgetrennt wurde.

Das so erhaltene Produkt extrahierte man zwei Stunden lang bei 125°C mit einer 15 gew.-%igen Lösung von Titantetrachlorid in Ethylbenzol. Danach wurde das Festprodukt durch Filtration vom Extraktionsmittel getrennt und so lange mit n-Heptan gewaschen, bis dieses nur mehr 0,3 Gew.-% Titantetrachlorid enthielt.

Die daraus resultierende titanhaltige Feststoffkomponente enthielt 3,1 Gew.-% Titan, 7,5 Gew.-% Magnesium und 28,3 Gew.-% Chlor.

### 2. Polymerisation

In einem mit einem Rührer versehenen 800 1-Reaktor wurde bei einem Druck von 32 bar und einer Temperatur von 80°C gasförmiges Propylen eingeleitet und dieses bei einer mittleren Verweilzeit von 3 Stunden mit Hilfe eines Ziegler-Natta-Katalysatorsystems kontinuierlich polymerisiert. Dabei wurden pro Stunde 3,3 g der nach 1, hergestellten titanhaltigen Feststoffkomponente a), 300 mmol Triethylaluminium und 6 mmol Dimethylisobutyl isopropylsilan als Katalysatorbestandteile verwendet und diese jeweils getrennt in den Reaktor eindosiert. Die titanhaltige Feststoffkomponente a) wurde vorher mit einer 0,1 molaren Lösung von n-Butyllithium in n-Heptan versetzt, wobei diese Lösung in einer solchen Menge der titanhaltigen Feststoffkomponente a) zugesetzt wurde, daß die daraus resultierende Suspension pro Gramm der titanhaltigen Feststoffkomponente a) 0,025 mmol n-Butyllithium enthielt.

Nach Beendigung der Gasphasenpolymerisation erhielt man ein Polypropylen mit einem Schmeizflußindex von 8 g/10 min, bei 230°C und 2,16 kg (nach DIN 53 735). Die Produktivität des eingesetzten Katalysatorsystems, d.h. das Mengenverhältnis zwischen dem produzierten Polypropylen pro g titanhaltige Feststoffkomponente a), die Kristallinität, d.h. der Anteil xylolunlöslicher Polymerisate, der Feinststaubanteil (< 125 µm), sowie der Chlorgehalt und die Schüttdichte des erhaltenen Polypropylens sind in der nachstehenden Tabelle aufgeführt.

### Vergleichsbeispiel

Unter den Bedingungen des erfindungsgemäßen Beispieles wurde Propylen polymerisiert, jedoch auf die Zugabe der metallorganischen Verbindung n-Butyllithium zur titanhaltigen Feststoffkomponente a) verzichtet.

Nach Beendigung der Gasphasenpolymerisation erhielt man ein Polypropylen mit einem Schmelzflußindex von 8 g/10 min, bei 230°C und 2,16 kg (nach DN 53 735). Die Produktivität des eingesetzten Katalysatorsystems, sowie die Kristallinität, der Feinststaubanteil, der Chlorgehalt und die Schüttdichte des erhaltenen Polypropylens sind der nachstehenden Tabelle zu entnehmen.

**Tabelle**

| | Beispiel | Vergleichsbeispiel |
|---|---|---|
| Produktivität (g Polypropylen/g titanhaltige Feststoffkomponente) | 25.000 | 25.000 |
| Kristallinität (xylolunlösliche Anteile) [Gew.-%] | 97,5 | 97,5 |
| Feinststaubanteil (< 125 µm) [Gew.-%] | 0,3 | 2,5 |
| Chlorgehalt [ppm] | 10 | 10 |
| Schüttdichte*) [g/l] | 440 | 420 |

| | | |
|---|---|---|
| *) nach DIN 53 466 | | |

Aus der Tabelle wird ersichtlich, daß die mit dem erfindungsgemäßen Katalysatorsystem hergestellten Polypropylene einen verringerten Feinststaubanteil und eine erhöhte Schüttdichte aufweisen.

## Patentansprüche (Patentansprüche für folgende(n) Vertragsstaat(en): BE, DE, FR, GB, IT, NL)

1. Katalysatorsysteme vom Typ der Ziegler-Natta-Katalysatoren, enthaltend als aktive Bestandteile
a) eine titanhaltige Feststoffkomponente mit Titan, Magnesium, Halogen und einem Carbonsäureester als Elektronendonor,
b) eine Trialkylalumininiumverbindung, deren Substituenten jeweils 1 bis 8 C-Atome aufweisen, als Aluminiumverbindung,
c) eine weitere Elektronendonorkomponente, sowie als zusätzliche Komponente
d) eine metallorganische Verbindung der allgemeinen Formel A oder B
M¹R¹ (A), M²R¹R² (B),
in der M¹ ein Element der I. Hauptgruppe und M² ein Element der II. Hauptgruppe des Periodensystems bedeutet und R¹ und R² gleich oder verschieden sind und für eine C₁-C₁₀-Alkylgruppe, eine C₆-C₁₂-Aryl- oder Arylalkylgruppe, oder eine 5- bis 7-gliedrige Cycloalkylgruppe, die ihrerseits C₁-C₈-Alkylgruppen tragen kann, stehen.

2. Katalysatorsysteme nach Anspruch 1, in denen eine metallorganische Verbindung d) der allgemeinen Formel (A) verwendet wird.

3. Katalysatorsysteme nach Anspruch 2, in denen eine metallorganische Verbindung d) der allgemeinen Formel (A) verwendet wird, in der R¹ für eine C₁-C₁₀-Alkylgruppe steht.

4. Katalysatorsysteme nach den Ansprüchen 1 bis 3, in denen als weitere Elektronendonorkomponente c) eine Siliciumkomponente der allgemeinen Formel II
R³ₙSi(OR⁴)₄₋ₙ (II)
verwendet wird, in der R³ für eine C₁-C₁₂-Alkylgruppe, eine 5- bis 7-gliedrige Cycloalkylgruppe, die ihrerseits eine C₁- bis C₈-Alkylgruppe tragen kann, oder eine C₆- bis C₁₂-Aryl- oder Arylalkylgruppe steht, R⁴ einer C₁- bis C₁₂-Alkylgruppe entspricht und n für die Zahlen 1, 2 oder 3 steht.

5. Verfahren zur Herstellung der Katalysatorsysteme gemäß den Ansprüchen 1 bis 4, dadurch gekennzeichnet, daß man der titanhaltigen Feststoffkomponente a) nach deren Herstellung 0,005 bis 0,5 mmol, bezogen auf 1 g der titanhaltigen Feststoffkomponente a), der metallorganischen Verbindung d) hinzufügt und die dadurch erhaltene Zusammensetzung anschließend mit der Aluminiumkomponente b) und der weiteren Elektronendonorkomponente c) vereinigt.

6. Verfahren zur Herstellung von Polymerisaten des Propylens durch Polymerisation bei Temperaturen von 20 bis 150°C und Drücken von 1 bis 100 bar, dadurch gekennzeichnet, daß man hierzu ein Katalysatorsystem gemäß den Ansprüchen 1 bis 4 verwendet.

## Patentansprüche (Patentansprüche für folgende(n) Vertragsstaat(en): ES)

1. Verfahren zur Herstellung von Katalysatorsystemen vom Typ der Ziegler-Natta-Katalysatoren, enthaltend als aktive Bestandteile
a) eine titanhaltige Feststoffkomponente mit Titan, Magnesium, Halogen und einem Carbonsäureester als Elektronendonor,
b) eine Trialkylaluminiumverbindung, deren Substituenten jeweils 1 bis 8 C-Atome aufweisen, als Aluminiumverbindung,
c) eine weitere Elektronendonorkomponente, dadurch gekennzeichnet, daß man als zusätzliche Komponente
d) eine metallorganische Verbindung der allgemeinen Formel A oder B
M¹R¹ (A), M²R¹R² (B),
verwendet, in der M¹ ein Element der I. Hauptgruppe und M² ein Element der II. Hauptgruppe des Periodensystems bedeutet und R¹ und R² gleich oder verschieden sind und für eine C₁-C₁₀-Alkylgruppe, eine C₆-C₁₂-Aryl- oder Arylalkylgruppe, oder eine 5- bis 7-gliedrige Cycloalkylgruppe, die ihrerseits C₁-C₈-Alkylgruppen tragen kann, stehen.

2. Verfahren nach Anspruch 1, dadurch gekennzeichnet, daß man eine metallorganische Verbindung d) der allgemeinen Formel (A) verwendet.

3. Verfahren nach Anspruch 2, dadurch gekennzeichnet, daß man eine metallorganische Verbindung d) der allgemeinen Formel (A) verwendet, in der R¹ für eine C₁-C₁₀-Alkylgruppe steht.

4. Verfahren nach den Ansprüchen 1 bis 3, dadurch gekennzeichnet, daß man als weitere Elektronendonorkomponente c) eine Siliciumkomponente der allgemeinen Formel II
R³ₙSi(OR⁴)₄₋ₙ (II)
verwendet, in der R³ für eine C₁-C₁₂-Alkylgruppe, eine 5- bis 7-gliedrige Cycloalkylgruppe, die ihrerseits eine C₁- bis C₈-Alkylgruppe tragen kann, oder eine C₆- bis C₁₂-Aryl- oder Arylalkylgruppe steht, R⁴ einer C₁- bis C₁₂-Alkylgruppe entspricht und n für die Zahlen 1, 2 oder 3 steht.

5. Verfahren nach den Ansprüchen 1 bis 4, dadurch gekennzeichnet, daß man der titanhaltigen Feststoffkomponente a) nach deren Herstellung 0,005 bis 0,5 mmol, bezogen auf 1 g der titanhaltigen Feststoffkomponente a), der metallorganischen Verbindung d) hinzufügt und die dadurch erhaltene Zusammensetzung anschließend mit der Aluminiumkomponente b) und der weiteren Elektronendonorkomponente c) vereinigt.

6. Verfahren zur Herstellung von Polymerisaten des Propylens durch Polymerisation bei Temperaturen von 20 bis 150°C und Drücken von 1 bis 100 bar, dadurch gekennzeichnet, daß man hierzu ein nach den Ansprüchen 1 bis 5 hergestelltes Katalysatorsystem verwendet.

## Claims (Claims for the following Contracting State(s): BE, DE, FR, GB, IT, NL)

1. A Ziegler-Natta-type catalyst system containing, as active constituents,
a) a titanium-containing solid component which also contains magnesium, halogen and a carboxylic acid ester as electron donor,
b) a trialkylaluminum compound whose substituents each have from 1 to 8 carbon atoms, as aluminum compound,
c) a further electron-donor component, and, as an additional component,
d) an organometallic compound of the general formula A or B
M¹R¹ (A), M²R¹R² (B),
where M¹ is an element from main group I, and M² is an element from main group II of the Periodic Table, and R¹ and R² are identical or different C₁-C₁₀-alkyl, C₆-C₁₂-aryl, C₆-C₁₂-arylalkyl, or 5- to 7-membered cycloalkyl, which may itself carry C₁-C₈-alkyl groups.

2. A catalyst system as claimed in claim 1, in which an organometallic compound d) of the general formula (A) is used.

3. A catalyst system as claimed in claim 2, in which an organometallic compound d) of the general formula (A) in which R¹ is C₁-C₁₀-alkyl is used.

4. A catalyst system as claimed in any of claims 1 to 3, in which the further electron-donor component c) is a silicon component of the general formula II
R³ₙSi(OR⁴)₄₋ₙ (II)
where R³ is C₁-C₁₂-alkyl, 5- to 7-membered cycloalkyl, which may itself carry a C₁- to C₈-alkyl group, or C₆- to C₁₂-aryl or C₆- to C₁₂-arylalkyl, R⁴ is C₁- to C₁₂-alkyl, and n is 1, 2 or 3.

5. A process for the preparation of a catalyst system as claimed in any of claims 1 to 4, which comprises adding from 0.005 to 0.5 mmol, based on 1 g of the titanium-containing solid component a), of the organometallic compound d) to the titanium-containing solid component a) after the preparation thereof, and subsequently combining the composition thereby obtained with the aluminum component b) and the further electron-donor component c).

6. A process for the preparation of the polymer of propylene by polymerization at from 20 to 150°C and at from 1 to 100 bar, which comprises using a catalyst system as claimed in any of claims 1 to 4.

## Claims (Claims for the following Contracting State(s): ES)

1. A process for the preparation of a Ziegler-Natta-type catalyst system containing, as active constituents,
a) a titanium-containing solid component which also contains magnesium, halogen and a carboxylic acid ester as electron donor,
b) a trialkylaluminum compound whose substituents each have from 1 to 8 carbon atoms, as aluminum compound,
c) a further electron-donor component, which comprises, using as an additional component
d) an organometallic compound of the general formula A or B
M¹R¹ (A), M²R¹R² (B),
where M¹ is an element from main group I, and M² is an element from main group II of the Periodic Table, and R¹ and R² are identical or different C₁-C₁₀-alkyl, C₆-C₁₂-aryl, C₆-C₁₂-arylalkyl, or 5- to 7-membered cycloalkyl, which may itself carry C₁-C₈-alkyl groups.

2. A process as claimed in claim 1, wherein an organometallic compound d) of the general formula (A) is used.

3. A process as claimed in claim 2, wherein an organometallic compound d) of the general formula (A) in which R¹ is C₁-C₁₀-alkyl is used.

4. A process as claimed in any of claims 1 to 3, wherein the further electron-donor component c) is a silicon component of the general formula II
R³ₙSi(OR⁴)₄₋ₙ (II)
where R³ is C₁-C₁₂-alkyl, 5- to 7-membered cycloalkyl, which may itself carry a C₁- to C₈-alkyl group, or C₆- to C₁₂-aryl or C₆- to C₁₂-arylalkyl, R⁴ is C₁- to C₁₂-alkyl, and n is 1, 2 or 3.

5. A process as claimed in any of claims 1 to 4, which comprises adding from 0.005 to 0.5 mmol, based on 1 g of the titanium-containing solid component a), of the organometallic compound d) to the titanium-containing solid component a) after the preparation thereof, and subsequently combining the composition thereby obtained with the aluminum component b) and the further electron-donor component c).

6. A process for the preparation of the polymer of propylene by polymerization at from 20 to 150°C and at from 1 to 100 bar, which comprises using a catalyst system prepared as claimed in any of claims 1 to 5.

## Revendications (Revendications pour l'(les) Etat(s) contractant(s) suivant(s): BE, DE, FR, GB, IT, NL)

1. Systèmes de catalyseur du type des catalyseurs de Ziegler-Natta, contenant comme constituante actifs
a) un composant solide contenant du titane avec du titane, du magnésium, un halogène et un ester d'acide carboxylique comme donneur d'électrons,
b) un dérivé trialkylaluminium dont les substituants contiennent chacun de 1 à 8 atomes de carbone, en tant que composé de l'aluminium,
c) un autre composant donneur d'électrons, ainsi que comme composé additionnel
d) un composé organométallique de formule générale A ou B
M¹R¹ (A), M²R¹R² (B),
dans lesquelles M¹ représente un élément du groupe Ia et M² un élément du groupe IIa de la classification périodique et R¹ et R² sont identiques ou différents et sont mis pour un groupement alkyle en C₁-C₁₀, un groupement aryle ou arylalkyle en C₆-c₁₂ ou un groupement cycloalkyle à 5-7 chaînons qui peut lui-même porter des groupements alkyle en C₁-C₈.

2. Systèmes de catalyseur selon la revendication 1, dans lesquels on utilise un composé organométallique d) de formule générale (A).

3. Systèmes de catalyseur selon la revendication 2, dans lesquels on utilise un composé organométallique d) de formule générale (A) dans laquelle R¹ est mis pour un groupement alkyle en C₁-C₁₀.

4. Systèmes de catalyseur selon les revendications 1 à 3, dans lesquels on utilise comme autre composant donneur d'électrons c) un composé du silicium de formule générale II
R³ₙSi(OR⁴)₄₋ₙ (II)
dans laquelle R³ représente un groupement alkyle en C₁-C₁₂, un groupement cycloalkyle à 5-7 chaînons qui peut lui-même porter un groupement alkyle en C₁-C₈, ou un groupement aryle ou arylalkyle en C₆-C₁₂, R⁴ représente un groupement alkyle en C₁-C₁₂ et n est mis pour les nombres 1, 2 ou 3.

5. Procédé de préparation de systèmes de catalyseur selon les revendications 1 à 4, caractérisé en ce qu'on ajoute au composant de catalyseur contenant du titane a), après sa préparation, 0,005 à 0,5 mmole, pour 1 g du composant solide contenant du titane a), du composé organométallique d) et on combine la composition ainsi obtenue avec le composé d'aluminium b) et l'autre composant donneur d'électrons c).

6. Procédé de préparation de polymères du propylène par polymérisation à des températures de 20 à 150°C et des pressions de 1 à 100 bar, caractérisé en ce qu'on utilise à cet effet un système de catalyseur selon les revendications 1 à 4.

## Revendications (Revendications pour l'(les) Etat(s) contractant(s) suivant(s): ES)

1. Procédé de préparation de systèmes de catalyseur du type des catalyseurs de Ziegler-Natta, contenant code constituants actifs
a) un composant solide contenant du titane avec du titane, du magnésium, un halogène et un ester d'acide carboxylique comme donneur d'électrons,
b) un dérivé trialkylaluminium dont les substituants contiennent chacun de 1 à 8 atomes de carbone, en tant que composé de l'aluminium,
c) un autre composant donneur d'électrons, caractérisé en ce qu'on utilise comme composé additionnel
d) un composé organométallique de formule générale A ou B
M¹R¹ (A), M²R¹R² (B),
dans lesquelles M¹ représente un élément du groupe Ia et M² un élément du groupe IIa de la classification périodique et R¹ et R² sont identiques ou différents et sont mis pour un groupement alkyle en C₁-C₁₀, un groupement aryle ou arylalkyle en C₆-C₁₂, ou un groupement cycloalkyle à 5-7 chaînons qui peut lui-même porter des groupements alkyle en C₁-C₈.

2. Procédé selon la revendication 1, caractérisé en ce qu'on utilise un composé organométallique d) de formule générale (A).

3. Procédé selon la revendication 2, caractérisé en ce qu'on utilise un composé organométallique d) de formule générale (A) dans laquelle R¹ est mis pour un groupement alkyle en C₁-C₁₀.

4. Procédé selon les revendications 1 à 3, caractérisé en ce qu'on utilise comme autre composant donneur d'électrons c) un composé du silicium de formule générale II
R³ₙSi(OR⁴)₄₋ₙ (II)
dans laquelle R³ représente un groupement alkyle en C₁-C₁₂, un groupement cycloalkyle à 5-7 chaînons qui peut lui-même porter un groupement alkyle en C₁-C₈, ou un groupement aryle ou arylalkyle en C₆-C₁₂, R⁴ représente un groupement alkyle en C₁-C₁₂ et n est mis pour les nombres 1, 2 ou 3.

5. Procédé selon les revendications 1 à 4, caractérisé en ce qu'on ajoute au composant de catalyseur contenant du titane a), après sa préparation, 0,005 à 0,5 mmole, pour 1 g du composant solide contenant du titane a), du composé organométallique d) et on combine la composition ainsi obtenue avec le composé d'aluminium b) et l'autre composant donneur d'électrons c).

6. Procédé de préparation de polymères du propylène par polymérisation à des températures de 20 à 150°C et des pressions de 1 à 100 bar, caractérisé en ce qu'on utilise à cet effet un système de catalyseur préparé selon les revendications 1 à 5.
